# EUROPEAN PATENT APPLICATION

(11) **EP 4 607 377 A1**
(43) Date of publication of application: **27.08.2025**
(21) Application number: 24158852.4
(22) Date of filing: 21.02.2024
(51) Int. Cl.: G06F 21/10, G06F 21/64, G06F 21/32, H04L 9/32

(54) **A METHOD FOR PROVIDING CONTENT FOR AUTHENTICATION AND AUTHENTICATING CONTENT**

(71) Applicant: Terra Quantum AG, 9000 St. Gallen (CH)
(72) Inventor: ARSHANSKII, Aleksei, 9000 St. Gallen (CH); KOLYBELNIKOV, Alexander, 9000 St. Gallen (CH)
(74) Representative: Lucke, Andreas

(57) **Abstract**

The present invention provides a computer-implemented method for providing content of a content author for authentication, the method comprising: obtaining, by the content author, a first author fragment of content; generating a first state author vector from the first author fragment of content; and creating a first block of key information based on the first author fragment of content, wherein the first block of key information comprises information of the first state author vector and a first digital signature.

## Description

### FIELD OF THE INVENTION

The present invention relates to the field of content authentication linked to a specific content author, in particular to distribution ledger-based methods and systems for providing authenticated content and/or verifying provided content of a content author. The present invention aims at providing a method to authenticate and/or verify content of a content author to be authentic, truthful, and not manipulated nor forged by means of distribution ledger-based methods and systems.

### BACKGROUND OF THE INVENTION

In recent years, due to the existing technologies for creating realistic impersonations of people, numerous threats associated with the forgery of identity or identity theft have been created in media content. As deepfake technology has evolved to be increasingly convincing and available to the public, media content can easily be manipulated to replace one person's likeness convincingly with that of another using artificial intelligence. In many cases, it is very difficult to differentiate between the truthful original content and the manipulated content. Hence, there is a need for methods to authenticate content, in particular the truthfulness of the people's identity, actions, and/or behavior presented in media content.

Current methods are available for authenticating media content. In the prior art, authentication methods of content, such as the method described in US 11,075,744 B2, involve distribution ledger-based methods for creating blocks of information associated with media recordings. In US 10,176,309 B2 watermarked content segments are sent for authentication. For authentication, the content is checked, whether the received content segments correspond to the cryptographic representation of the sent water marked content segments. In WO 2022/049053 A1 content segments, specifically signed by a registered content owner, that are sent for authentication, are checked regarding whether the indicated content owner of the received content segments corresponds to the truthful identity of the content owner.

However, all these use cases do not aim specifically at the authentication of the identity of a person perceived or represented in the content. They do not confirm that the person represented in the content is indeed the indicated person and not a digitally manipulated counterfeit. As a result, misleading information can be disseminated to the public. In addition, identity theft and fraud can have a detrimental effect on cybersecurity.

Given the known prior art, what is needed is a method that is able to authenticate and confirm a person perceived in media content as not manipulated or forged, in particular, resistant to deepfake technology.

### SUMMARY OF THE INVENTION

These objectives of the present invention are achieved with a computer-implemented method and device for providing content of a content author for authentication according to independent claims 1 and 6, and a computer-implemented method and device for authenticating a provided content of a content author according to independent claims 7 and 14. The dependent claims relate to preferred embodiments.

In a first aspect of the invention, a computer-implemented method for providing content of a content author for authentication comprises: obtaining, by the content author, a first author fragment of content; generating a first state author vector from the first author fragment of content; and creating a first block of key information based on the first author fragment of content, wherein the first block of key information comprises information of the first state author vector and the first digital signature.

Creating a first block of key information based on the first author fragment of content, wherein the first block of key information comprises information of the first state author vector and the first digital signature enhances the security of authentication. By incorporating the first digital signature into the first block of key information, the content being exchanged cannot be altered or tampered with without the signature becoming invalid. It may verify the identity of the content author involved, ensuring that only the content author who is verified in the account can access and transact on the network. It may also provide non-repudiation, meaning parties cannot deny their involvement in the transaction. Thus, it increases transparency and trust in the system.

Authentication, in the context of the present invention, may generally refer to an ongoing or continuous verification process of the content author in the content.

The first aspect of the invention aims at providing content of a content author for authentication.

According to an embodiment, after generating the first state author vector from the first author fragment of content, the method may further comprise: requesting from a key center a first certificate to create a first digital signature for the first author fragment of content. Requesting from a key center a first certificate to create a first digital signature for the first author fragment of content may enhance the security of authentication.

The certificate requested from the key center may comprise a public key and identification information of the content author.

The content, in the context of the present invention, may generally refer to media content consumed or produced by the content author. In particular, the content may comprise multimedia elements. As an example, the content may comprise different digital media content forms of text, audio, images, animations, and/or video or a combination thereof. The content may be uploaded to a digital platform.

In some examples, the content may be pre-recorded.

In the context of the present invention, the content may be produced by the content author.

The content author, in the context of the present invention, may be part of the content and/or recognized in the content as the content author. The content author may be perceived audibly or visually in the content. As an example, the content author may be perceived by the outward appearance, the face comprising the structural composition of the face and/or expressions of the face, the body comprising the structural composition of the body and/or movements of the body, the voice, or similar aspects related to personal characteristics of the content author.

The content author may be linked or registered to an account of a digital platform. The content author may be verified in the account of the digital platform. The content author may represent one or more persons who wish to be authenticated in the content, wherein the one or more persons to be authenticated in the content may be linked to an account of the content author.

In some examples, the content may be fragmentized in a plurality of fragments of content, wherein the first author fragment of content may be one of the plurality of fragments of content, wherein a block of key information may be created for each of the plurality of fragments of content.

In some examples, the content may be fragmentized according to a pre-defined rule, and, optionally, wherein the pre-defined rule may comprise the fragmentation of content in a pre-defined number of equal fragments of content.

The state author vector, in the context of the present invention, may refer to a mathematical vector that contains data about the state of being or physical condition of the content author at a specific time in the content. The state author vector may not only refer to the state of the content author at said specific time in the content, but also generally to the state of being or physical condition of the content author at said specific time in the content. For example, the state author vector may comprise parameters of the content author's state or physical condition. The parameters of the content author's state or condition may relate to personal characteristics of the content author. They may pertain to the outward appearance, the face comprising the structural composition of the face and/or expressions of the face, the body comprising the structural composition of the body and/or movements of the body, the voice, or similar aspects of the content author. For instance, in some examples, the first state author vector may be linked to a timestamp of the first author fragment of content.

Another state author vector may be generated for each of the plurality of fragments of content.

As an advantage, the method according to the present invention may enable the actions of the content author to be recorded, captured, registered and/or grasped independently, for instance, from biometrics data in the method.

The key center, in the context of the present invention, may be an independent trusted party, for instance, a software-based online infrastructure that facilitates interactions and transactions between users such as a digital platform. The key center may comprise the account of the content author. The key center may store information about the content author that might be necessary for the authentication, for instance, biometrics data, a password and/or a cryptographic key. The key center may have access, and/or control over the information of the content author.

The first block of key information, in the context of the invention, may be cryptographic transaction data related to the first state author vector of the first author fragment of content.

The first block of key information may be an intermittent block of a blockchain.

In some examples, the first block of key information may further comprise information about numbering of the first block of key information, and/or a preceding state author vector, wherein the preceding state author vector may be obtained from a fragment of content preceding the first author fragment, and/or the first certificate for verification of the first digital signature.

The first digital signature for the first block of key information may be created using a private key of the content author. The first digital signature may be created by the key center.

According to an example, the method may further comprise: transmitting, by the content author, structural information of the first block of key information to the key center; and sending instructions for storing the structural information in a distributed ledger linked to an account of the content author.

The structural information of the first block of key information, in the context of this invention, may comprise a unique identifier, a timestamp, and/or a cryptographic hash from a preceding block. The structural information of the first block of key information may be stored in any format, such as a file or a QR-code. The file or the QR-code may be directly linked to the content.

The unique identifier may be the numbering of the first block of key information, in particular, the unique identifier may be a block number regarding the position of the first block of key information in the blockchain.

The timestamp may be linked to a timestamp of the first author fragment of content.

The cryptographic hash from the preceding block may relate to the preceding state author vector of the fragment of content preceding the first author fragment of content.

If the structural information inside the block was tampered with, the cryptographic hash of the block of key information will change as well. These pieces of structural information may ensure the integrity, security, and continuity of the content of the content author for the content user.

According to an example, the method may further comprise, prior to creating the first block of key information based on the first author fragment of content: replacing the first state author vector by a first database state author vector, wherein the first database state author vector is a vector of a state vectors database wherein a metric between the first state author vector and the first database state author vector lies below a pre-defined threshold value.

The state vectors database may refer to a database that stores mathematical vector data that contains data about a state of being or physical condition of different persons who may not be the content author. Each mathematical vector may consist of a set of numerical values or features that describe the characteristics of the state of being or physical condition. The state of being or physical condition may be related to an outward appearance, a face comprising the structural composition of the face and/or expressions of the face, a body comprising the structural composition of the body and/or movements of the body, a voice, or similar aspects of a person. By using appropriate distance metrics, such as Euclidean distance or cosine similarity, a database state author vector most similar to the first state author vector within the state vectors database may be identified.

The state author vector may be different from the database state author vector. The first database state author vector that may be closest in similarity to the state author vector may replace the first state author vector.

As an advantage of replacing the first state author vector by a first database state author vector, stability of the system may be increased, as bringing all vectors to a common standard, the system as well as all comparison operations may be simplified. As a further advantage, the computational power as well as the memory requirements can be decreased, since the identifier of the first state author vector can be replaced by the number of the first database state author vector in the state vectors database, instead of saving the entire data information of the first state vector itself. Hence, the storage space of the first block of key information may be saved.

According to an embodiment, the method may further comprise: prior to obtaining the first author fragment of content, passing a pre-defined time of content that is transmitted continuously.

According to an embodiment, the method may further comprise: generating the first author fragment after passing a pre-defined time of content.

In the embodiment mentioned above, the content may be transmitted in real-time. In particular, the content may be delivered and consumed in a continuous manner by a content user. For instance, the content may be a real-time streaming of multimedia elements.

The predefined time may refer to a specific point or duration that has been predetermined or established in advance.

As an advantage of the method, creating a first block of key information after passing the pre-defined time of content, wherein the content may be transmitted in real-time, may enable the authentication of real-time content, and therefore, the direct communication that the content author is truthful, trustful, and authentic as perceived in the content transmitted in real-time is possible.

According to an example, subsequent to creating the first block of key information based on the first author fragment of content, wherein the first block of key information comprises information of the first state author vector and the first digital signature, the method may further comprise: sending the first block of key information to the content user.

In particular, the first block of key information may further comprise information about the biometrics of the content author, the timestamp of the first state author vector, and/or the first certificate for verification of the first digital signature.

As an advantage of the method, sending the first block of key information to the content user enables the authentication of real-time content. The content may be verified simultaneously to consuming the content, therefore, the direct communication that the content author is truthful, trustful, and authentic as perceived in the content transmitted in real-time is possible.

According to an example, the method may further comprise: providing, by the content author, biometrics vector data of the content author; sending the biometrics vector data for verification and confirmation of the identity of the content author to the key center; sending instructions for storing verified biometrics vector data of the content author in a biometrics vector database.

The biometrics vector data, in the context of the invention, may refer to mathematical vectors of biometric characteristics or attributes of the content author. The biometrics vector data may comprise facial features, voice patterns, and/or gait patterns of the content author. The biometrics vector data may be registered biometrics vector data of the content author.

The biometrics vector data may be used as identity verification of the content author. The biometrics vector data may further be used for access control to the account of the content author. The biometrics vector data may be used to authenticate the identity of the content author in each fragment of content.

In some examples, the content author may represent one or more persons to be verified in the content, wherein one or more persons to be verified in the content are linked to an account of the content author, wherein the biometrics vector data for the one or more persons is provided in the account of the content author.

In some examples, the account of the content author in the key center may be linked to the biometrics vector database.

The biometrics vector obtained at any given time may refer to the same verified biometrics vector data in the biometrics vector database. As an advantage, the use of biometrics vector data of the content author may add an additional authentication level for the content author. The state author vector primarily may refer to the authentication of the actions conducted by the content author in the content. The biometrics vector data may refer to the authentication of the identity of the content author. This implementation may further increase the confidentiality, integrity, and authentication of the content. It may increase the efficiency, transparency, security, and trust in the authentication method. It may further help protect against fraud, unauthorized access, and tampering of content.

According to an example, the method further comprises obtaining a second author fragment of content; generating a second state author vector from the second author fragment of content; creating a second block of key information based on the second author fragment of content, wherein the second block of key information comprises information of the second state author vector and the second digital signature, wherein the second author fragment is a subsequent fragment of the first author fragment of content, wherein the first author fragment of content and the second author fragment of content are connected sequentially.

According to an example, after generating the second state author vector from the second author fragment of content, the method may further comprise: requesting from a key center a second certificate to create a second digital signature for the second author fragment of content.

In some examples, the content may be fragmentized in a plurality of fragments, wherein the first author fragment of content and the second author fragment of content each may be one of the plurality of fragments, wherein a block of key information may be created for each of the fragments of the plurality of fragments, wherein the first author fragment may precede the second author fragment of content.

In some examples, the second block of key information may be a subsequent block of key information of the first block of key information. The first block of key information may be a previous or a preceding block of key information in relation to a second block of key information. The second block of key information may be a next block of key information succeeding the first block of key information.

In general, in implementations of the invention there may be any number of blocks of key information.

For instance, in some examples, the second state author vector may be linked to another timestamp of the content different from the timestamp of the first state author vector.

In some examples, the second block of key information may further comprise information about numbering of the second block of key information, and/or the first state author vector, and/or the second certificate for verification of the first digital signature. The numbering of the second block of key information in relation to the first block of key information may be incremented by one.

In the first aspect, the invention additionally relates to a device for providing of a content author for authentication, comprising a content fragment unit, configured to obtain a first author fragment of content. The device further comprises an author state recognition unit, configured to generate a first state author vector from the first author fragment of content, and a first output unit, configured to create a first block of key information based on the first author fragment of content, wherein the first block of key information comprises information of the first state author vector and the first digital signature.

According to an embodiment, the device may further comprise an author communication unit, configured to request from a key center a first certificate to create a first digital signature for the first author fragment of content.

According to an embodiment, the device may further comprise an author vector replacing unit, configured to replace the first state author vector by a first database state author vector, wherein the first database state author vector may be a vector of a state vectors database wherein a metric between the first state author vector and the first database state author vector may lie below a pre-defined threshold value.

In an example, the device may further comprise a second output unit, configured to generate the first author fragment after passing a pre-defined time of content prior to obtaining the first author fragment of content.

Alternatively, the device may further comprise a biometrics data providing unit, configured to provide biometrics vector data of the content author; a sending unit, configured to send the biometrics vector data for verification and confirmation of the identity of the content author to the key center, the sending unit, further configured to send instructions to store verified biometrics vector data of the content author in a biometrics vector database.

According to an embodiment, the content fragment unit may further be configured to obtain a second author fragment of content; the author state recognition unit maybe further configured to generate a second state author vector from the second author fragment of content; the author communication unit may be further configured to request from the key center a second certificate to create a second digital signature for the second author fragment of content; the first output unit may be further configured to create a second block of key information based on the second author fragment of content, wherein the second block of key information comprises information of the second state author vector and the second digital signature, wherein the second author fragment may be a subsequent fragment of the first author fragment of content, wherein the first author fragment of content and the second author fragment of content may be connected sequentially.

In a second aspect, the invention relates to a computer-implemented method for authenticating a provided content of a content author, comprising: receiving, by the content user, content of the content author; requesting from a key center information of a first block of key information based on a first author fragment of content, wherein the first author fragment of content is associated with the content author and wherein the first block of key information comprises information of a first state author vector and a first digital signature; obtaining a first user fragment of content, wherein the first user fragment of content corresponds to the first author fragment of content; and authenticating the content by checking the correctness of the first digital signature.

The second aspect of the invention aims at authenticating the provided content of the content author.

According to an example, the method according to the second aspect of the invention, may further comprise: Verifying the first digital signature using a first certificate retrieved from the first block of key information.

The first block of key information may further comprise information of a first certificate.

The first certificate may comprise a public key of the content author.

In the case of untampered content, when the user fragment of content corresponds to the author fragment of content, the user fragment of content and the author fragment of content may be identical.

According to an example, the method according to the second aspect of the invention, may further comprise: obtaining, by the content user, a first biometrics vector from the first user fragment of content; comparing the first biometrics vector with biometrics vector data of the content author stored in a biometrics vectors database.

The method according to the second aspect of the invention may further comprise: verifying the biometrics vector and the first state user vector, wherein the verifying of the first state user vector and the biometrics vector is independent of each other.

According to an embodiment, the received content may be fragmentized in a plurality of fragments prior to obtaining the first author fragment of content, wherein the first author fragment of content may be one of the plurality of fragments.

In some examples, the received content may be pre-recorded.

In some examples, the content may be fragmentized according to a pre-defined rule, and, optionally, wherein the pre-defined rule may comprise the fragmentation of content in a pre-defined number of equal fragments.

According to an example, the method of the second aspect may further comprise: generating a first state user vector from the first user fragment of content; and verifying the content by comparing information of the first state user vector with information of the first block of key information.

In some examples, the method of the second aspect may further comprise, prior to requesting from the key center information of the first block of key information based on the first author fragment of content: replacing the first state user vector by a first database state user vector, wherein the first database state user vector is a vector of a state vectors database wherein a metric between the first state user vector and the first database state user vector lies below a pre-defined threshold value.

The first database state user vector and the first database state author vector may be a vector from the same state vectors database.

According to an example, the method of the second aspect may further comprise: checking a plurality of blocks for the presence of missing and/or excess blocks of the plurality of blocks.

The plurality of blocks may refer to a plurality of blocks of key information that have been created based on the plurality of author fragments of content and contain the digital signature. The plurality of blocks may be received by the content user from the key center. The plurality of blocks may represent a continuous structure of the content. Excess blocks and/or missing blocks within the plurality of blocks may indicate a change in the continuous structure of the content and may indicate a tampering of the content, as fragments of content might have been added or removed from the plurality of blocks.

According to an embodiment, the content according to the second aspect of the invention may be received in real-time.

According to an example, the method of the second aspect may further comprise: requesting from a key center information of a second block of key information based on a second author fragment of content, wherein the second author fragment of content may be associated with the content author and wherein the second block of key information may comprise information of a second state author vector and a second digital signature; obtaining a second user fragment of content, wherein the second user fragment of content may correspond to the second author fragment of content; authenticating the content by checking the correctness of the second digital signature; and sending instructions to add the second block of key information to the first block of key information connecting the first block of key information and the second block of key information sequentially.

According to an example, the method of the second aspect may further comprise: generating a second state user vector from the second user fragment of content; and verifying the content by comparing information of the second state user vector with information of the second block of key information.

According to an example, the second block of key information according to the second aspect of the invention may be connected to the first block of key information through a hash value of the first block of key information.

The hash value, in the context of the present invention, is a cryptographic hash that may be a unique alphanumeric string generated by a hash function. The hash value may serve as a unique digital fingerprint for the contents of each block of key information and may carry information from the preceding block of key information, linking the blocks of key information together in a secure chain. The hash value may be used to ensure the integrity, security, and continuity of the content. The smallest changes to the block of key information would create a completely different hash value, making the network tamper-proof, as any changes would be noticeable. The hash value may be used for the maintenance, authentication, and validation processes of a distributed ledger.

In the second aspect, the invention additionally relates to a device for authenticating a provided content of a content author, comprising: a content receiving unit, configured to receive content of the content author; a user communication unit, configured to request from a key center information of a first block of key information based on a first author fragment of content, wherein the first author fragment of content is associated with the content author and wherein the first block of key information comprises information of a first state author vector and a first digital signature; an input unit, configured to obtain a first user fragment of content, wherein the first user fragment of content corresponds to the first author fragment of content; and an authentication unit, configured to authenticate the content by checking the correctness of the first digital signature.

In an example, the device of the second aspect may further comprise a biometrics vector obtaining unit, configured to obtain a first biometrics vector from the first author fragment of content; a first control unit, configured to compare the first biometrics vector with biometrics vector data of the content author stored in a biometrics vectors database.

In an example, the first control unit of the second aspect of the invention may be further configured to verify the biometrics vector.

In an example, the device of the second aspect may further comprise a user state recognition unit, configured to generate a first state user vector from the first user fragment of content.

In an example, the device of the second aspect may further comprise a user vector replacing unit, configured to replace the first state user vector by a first database state user vector, wherein the first database state user vector may be a vector of a state vectors database wherein a metric between the first state user vector and the first database state user vector may lie below a pre-defined threshold value.

In an example, the device of the second aspect may further comprise a second control unit, configured to check the content for connectivity of a plurality of blocks and/or the presence of missing and/or excess blocks of the plurality of blocks.

In an example, the user communication unit of the second aspect may be further configured to request from a key center information of a second block of key information based on a second author fragment of content, wherein the second author fragment of content may be associated with the content author and wherein the second block of key information may comprise information of a second state author vector and a second digital signature; the input unit may be further configured to obtain a second user fragment of content, wherein the second user fragment of content may correspond to the second author fragment of content; the authentication unit may be further configured to verify the content checking the correctness of the second digital signature; and wherein the authentication unit may be further configured to send instructions to add the second block of key information to the first block of key information connecting the first block of key information and the second block of key information sequentially.

In an example, the user state recognition unit may be further configured to generate a second state user vector from the second user fragment of content; and the first control unit may further be configured to verify the content by comparing information of the second state user vector with information of the second block of key information.

A further aspect of the invention refers to a computer program comprising computer-readable instructions that when executed by a computer cause the computer to carry out the method of the first and the second aspect or one of the implementations of the first and the second aspect.

### BRIEF DESCRIPTION OF THE DRAWINGS

To illustrate the technical features of embodiments of the present invention more clearly, the accompanying drawings provided for describing the embodiments are introduced briefly in the following. The accompanying drawings in the following description are merely some embodiments of the present invention, modifications on these embodiments are possible without departing from the scope of the present invention as defined in the claims.

The features and numerous advantages of the method and system according to the present invention will be best understood from a detailed description of preferred embodiments with reference to the drawings, in which:
- FIG. 1: is a schematic illustration of a device for providing content of a content author for authentication according to an embodiment;
- FIG. 1a: is a schematic illustration of a device for providing content of a content author for authentication according to an embodiment;
- FIG. 2: is a schematic illustration of a device for authenticating a provided content of a content author according to an embodiment;
- FIG. 2a: is a schematic illustration of a device for authenticating a provided content of a content author according to an embodiment;
- FIG. 3: is a schematic overview of a digital distribution ledger-based environment in which the method and system according to the present invention may be employed;
- FIG. 4: is a flow diagram illustrating a method for providing content of a content author for authentication in accordance with an embodiment of the present invention;
- FIG. 5: is a flow diagram illustrating a method for providing content of a content author for authentication in accordance with an embodiment of the present invention;
- FIG. 6: is a flow diagram illustrating a method for providing content of a content author for authentication in accordance with an embodiment of the present invention;
- FIG. 7: is a flow diagram illustrating a method for providing content of a content author for authentication in accordance with an embodiment of the present invention;
- FIG. 8: shows examples of state vectors;
- FIG. 9: is a flow diagram illustrating a method for authenticating a provided content of a content author in accordance with an embodiment of the present invention;
- FIG. 10: is a flow diagram illustrating a method for authenticating a provided content of a content author in accordance with an embodiment of the present invention;
- FIG. 11: is a flow diagram illustrating a method for authenticating a provided content of a content author in accordance with an embodiment of the present invention.

### DETAILED DESCRIPTION OF EMBODIMENTS

The methods of the present invention aim at proving the identity of the content author as the rightful identity. In particular, the methods aim at proving that the behavior, actions, gestures, and/or acoustic phonetics or sounds conducted by the content author perceived in the content by the content user have not been modified. In the context of the invention, authentication may intend at a first level to prove that the person perceived in the content is indeed the content author or one of the content authors. Authentication may further intend at a second level to prove that the actions and/or the behavior and/or the voice of the person perceived in the content by the content user as rightful, original, authentic, and unmodified.

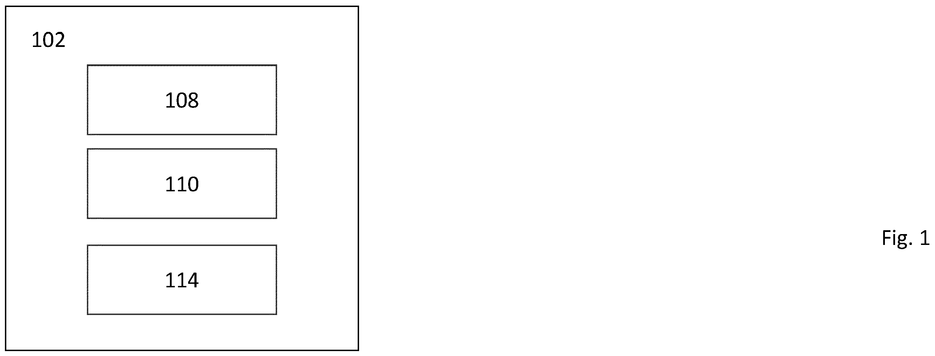

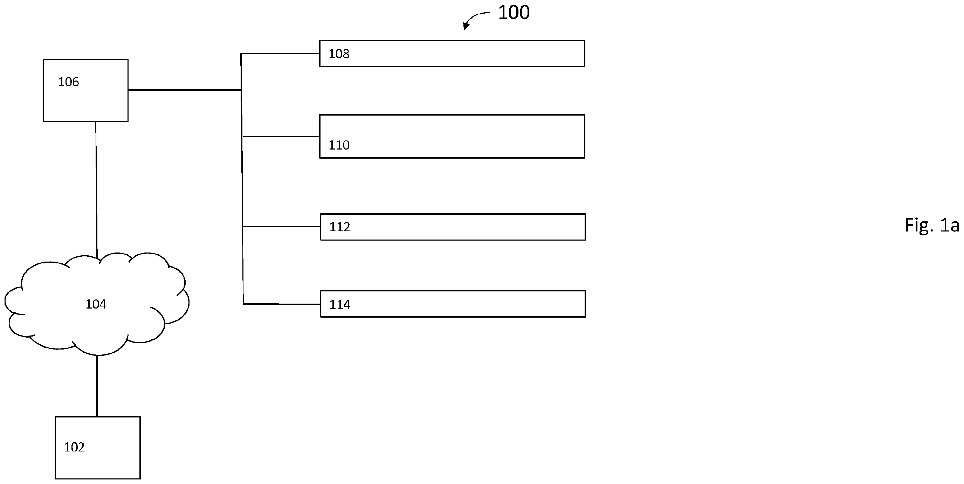

Methods and systems for providing content for authentication and authenticating content will now be described with reference to Figs. 1 to 11 for the example of a device for providing content for authentication and authenticating provided content.

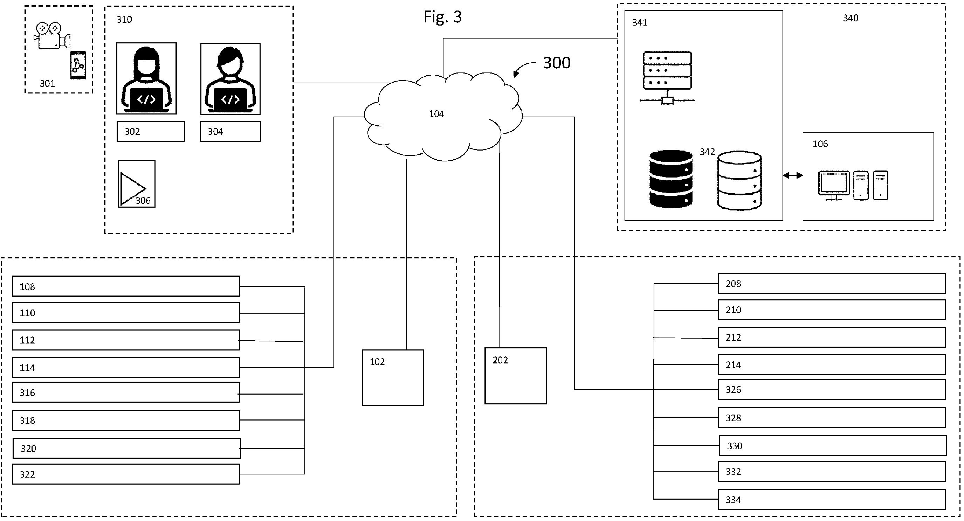

Fig. 1 shows a device for providing content of a content author for authentication 102 that comprises a content fragment unit 108, an author state recognition unit 110, an author communication unit 112 and a first output unit 114, wherein each of the mentioned units may be also connected to a server system 106 via a communication network 104, as shown in Fig. 1a and Fig. 3. The device for providing content of a content author for authentication 102 may be a communication device, such as a computer, tablet computer or mobile phone, or part of an application on a mobile device. The device for providing content of a content author for authentication 102 may be employed by the content author.

The content fragment unit 108 is configured to obtain a first author fragment of content. The content fragment unit may further be configured to obtain a second author fragment of content.

The author state recognition unit 110 is adapted to generate a first state author vector from the first author fragment of content. The author state recognition unit 110 may be further configured to generate a second state author vector from the second author fragment of content.

The first output unit 114 is configured to create a first block of key information based on the first author fragment of content, wherein the first block of key information comprises information of the first state author vector and the first digital signature.

The first output unit 114 may be further configured to create a second block of key information based on the second author fragment of content, wherein the second block of key information comprises information of the second state author vector and the second digital signature, wherein the second author fragment is a subsequent fragment of the first author fragment of content, wherein the first author fragment of content and the second author fragment of content are connected sequentially.

With reference to Fig. 1a, device 102 may be embedded in a content providing environment 100 which may be part of a digital media platform or an application on a mobile device.

As can be further taken from Fig.1a, the content providing environment 100 comprises device 102 for providing content of a content author for authentication that is connected to the server system 106 via the communication network 104. The device 102 may communicate via the communication network 104 and the server system 106 with the units 108 to 114.

The author communication unit 112 may be configured to request a first certificate to create a first digital signature for the first author fragment of content from a key center. The author communication unit 112 may be further configured to request from the key center a second certificate to create a second digital signature for the second author fragment of content.

The communication network 104 may be a wired, wireless, or mixed network. In some examples, the communication network 104 may be the internet.

A schematic illustration that shows an embodiment of the device 102 with additional units is given in Fig. 3.

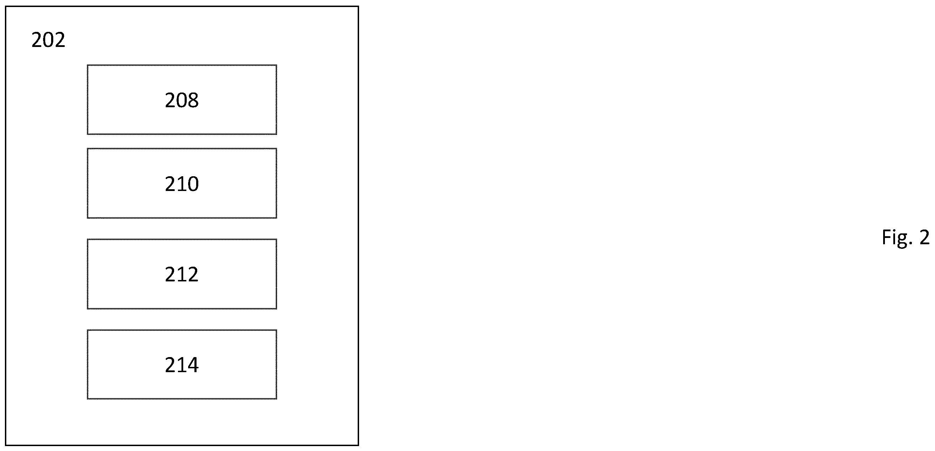

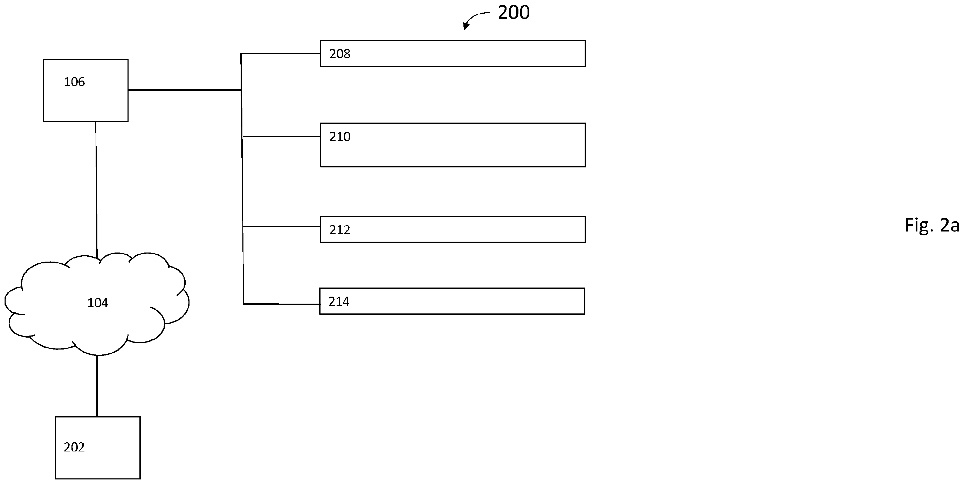

Fig. 2 shows a device 202 for authenticating a provided content of a content author that comprises a content receiving unit 208, a user communication unit 210, an input unit 212 and an authentication unit 214, wherein each of the mentioned units may be also connected to the server system 106 via the communication network 104, as shown in Fig. 2a and Fig. 3.

The device for authenticating a provided content of a content author 302 may be a communication device, such as a computer, tablet computer or mobile phone, or part of an application on a mobile device. The device for authenticating a provided content of a content author 302 may be employed by the content user 102 who wishes to authenticate the content provided by the content author for truthfulness of the content.

The content receiving unit 208 is configured to receive content from the content author.

The user communication unit 210 is configured to request from a key center information of a first block of key information based on a first author fragment of content, wherein the first author fragment of content is associated with the content author and wherein the first block of key information comprises information of a first state author vector and a first digital signature. The user communication unit 210 may be further configured to request from a key center information of a second block of key information based on a second author fragment of content, wherein the second author fragment of content is associated with the content author and wherein the second block of key information comprises information of a second state author vector and a second digital signature.

The input unit 212 is configured to obtain a first user fragment of content, wherein the first user fragment of content corresponds to the first author fragment of content. The input unit 212 may be further configured to obtain a second user fragment of content, wherein the second user fragment of content corresponds to the second author fragment of content.

The authentication unit 214 is configured to verify and authenticate the content by checking the correctness of the first digital signature. The authentication unit 214 may be further configured to verify the content by checking the correctness of the second digital signature, wherein the authentication unit 214 may be further configured to send instructions to add the second block of key information to the first block of key information connecting the first block of key information and the second block of key information sequentially. In an example, the authentication unit 214 may be further configured to verify the content by comparing information from the second state user vector with information from the second block of key information.

A schematic illustration that shows an embodiment of the device 202 with additional units is given in Fig. 2a and Fig. 3.

With reference to Fig. 2a, device 202 may be embedded in an authenticating content environment 200 which may be part of a digital media platform or an application on a mobile device.

As can be further taken from Fig. 2a, the device 202 for authenticating a provided content of a content author 302 may be connected to the server system 106 via the communication network 104 and may communicate via the communication network 104 and the server system 106 with the units 208 to 214.

A schematic illustration that shows a digital distribution ledger-based environment 300 to which the method and system according to the present invention may be applied to is given in Fig. 3.

As can be taken from Fig. 3, the digital distribution ledger-based environment 300 may comprise a media platform environment 310, a distributed ledger network 340, the device for providing content of a content author for authentication 102, the device for authenticating a provided content of a content author 202, wherein each of them is connected to the communication network 104. The communication network 104 may be a cloud environment.

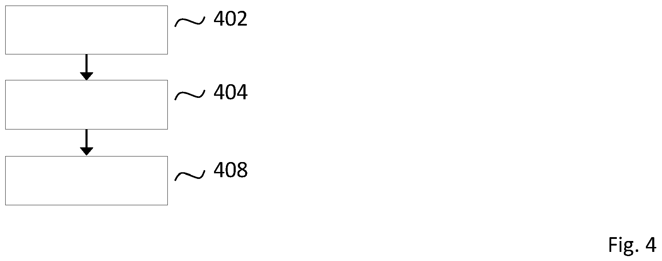

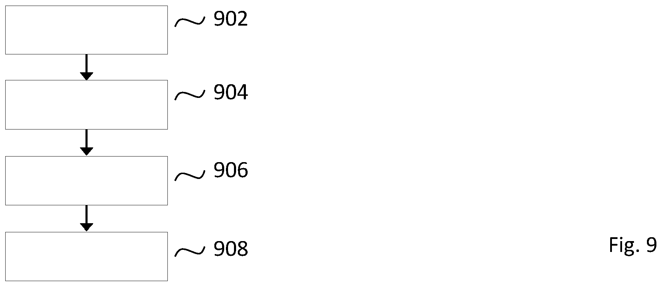

The media platform environment 310 may provide a digital platform for the content author 102 and the content user 202 to interact with one another. The content author 302 may employ a communication device 301, such as a computer, tablet computer, or mobile phone, or any device that is capable to provide content 306 for authentication. The content 306 may comprise multimedia elements. As an example, the content may comprise different digital media content forms of text, audio, images, animations, and/or video or a combination thereof. The content may be uploaded to the media platform. The content user 304 may employ a communication device, such as a computer, tablet computer, or mobile phone to authenticate the provided content 306 of the content author. The media platform may be an application installed on the communication device of the content author 302. The media platform environment 310 may include a computer program comprising computer-readable instructions (not shown) that when the program is executed by a computer, cause the computer to carry out the method shown in Fig. 4 or Fig. 9.

The distributed ledger network 340 may comprise a key center 341, databases 342, and a server system 106. The distributed ledger network 340 may record all structural information that has been transmitted and received, such as transactions and updates, between the devices 102 and 202, the media platform environment 310, the network 104 and the server system 106. The distributed ledger network may be linked to the media platform environment 310, devices 102 and 202, the key center 341, the databases 342, and the server system 106 via the communication network 104. Some or all of these entities 310, 102, 202, 341, 342, 106 may be operated or controlled by the distributed ledger network 340. For example, the devices 102 and 202 may include a software client capable of communicating with the distributed ledger network 340.

The distributed ledger network 340 may interact with devices 102 and 202, in particular with the author communication unit 112, the first output unit 114, the user communication unit 210 and the authentication unit 214, to manage cryptographic transaction data related to the state vector of the fragments of content within the digital distribution ledger-based environment 300. It may verify and validate the transactions before adding them to the distributed ledger network. It may use cryptographic principles like hashing and digital signatures to encrypt data and ensure its integrity and confidentiality of the blocks of key information and content.

The distributed ledger 340 may further interact with the content fragment unit 108 and the content receiving unit to handle upload, storage, and access control for the content 306 on the media platform environment 310. The plurality of fragments of content may be hashed, and the hash may be stored in the distributed ledger network 240, which may ensure its immutability and authenticate its origin.

The distributed ledger 340 may further interact with the devices 102 and 202 to enable streaming the media content 306 of the content author 302 to the content user 304.

The key center may comprise modules (not shown) that are configured to handle the registration of the content author 302 and the content user 304 and the authentication of the content author through registered biometrics vector data of the content author 302. The key center may further keep track of who has permission to access the content 306.

The key center 341 may comprise the databases 342. The databases 342 may comprise the biometrics vector database and the state vector database.

The server system 106 may be a physical or a virtual server. The server system 106 may function as a distributed storage that may store the structural information about the blocks of key information. The server system 106 may use decentralized storage solutions based on blockchain technology that may increase security and reduce reliance of the digital distribution ledger-based environment 300.

The device for providing content of a content author for authentication 102 may further comprise an author vector replacing unit 316, a second output unit 318, a biometrics data providing unit 320, and a sending unit 322.

The author vector replacing unit 316 may be configured to replace the first state author vector by a first database state author vector, wherein the first database state author vector is a vector of a state vectors database wherein a metric between the first state author vector and the first database state author vector lies below a pre-defined threshold value.

The second output unit 318 may be configured to generate the first author fragment after a pre-defined time of content has passed prior to obtaining the first author fragment of content.

The biometrics data providing unit 320 may be configured to provide biometrics vector data of the content author.

The sending unit 322 may be configured to send the biometrics vector data for verification and confirmation of the identity of the content author to the key center and further configured to send instructions to store verified biometrics vector data of the content author in a biometrics vector database.

The device for authenticating a provided content of a content author 202 may further comprise a user state recognition unit 326, a user vector replacing unit 328, a biometrics vector obtaining unit 330, a first control unit 332, and a second control unit 334.

The user state recognition unit 326 may be configured to generate a first state user vector from the first user fragment of content. The user state recognition unit 326 may be further configured to generate a second state user vector from the second user fragment of content.

The user vector replacing unit 328 may be configured to replace the first state user vector by a first database state user vector, wherein the first database state user vector is a vector of a state vectors database wherein a metric between the first state user vector and the first database state user vector lies below a pre-defined threshold value.

The biometrics vector obtaining unit 330 may be configured to obtain a first biometrics vector from the first author fragment of content.

The first control unit 332 may be configured to compare the first biometrics vector with biometrics vector data of the content author stored in a biometrics vectors database. The first control unit 332 may be further configured to verify the biometrics vector.

The second control unit 334 may be configured to check the content for connectivity of a plurality of blocks and/or the presence of missing and/or excess blocks of the plurality of blocks.

Fig. 4 shows a flow diagram illustrating a method for providing content of a content author for authentication in accordance with an embodiment of the present invention. This method may be initiated by the content user.

In a first step 402, a first author fragment of content is obtained by the content author.

In a second step 404, a first state author vector from the first author fragment of content is generated.

In a third step 408, a first block of key information based on the first author fragment of content is created, wherein the first block of key information comprises information of the first state author vector and the first digital signature.

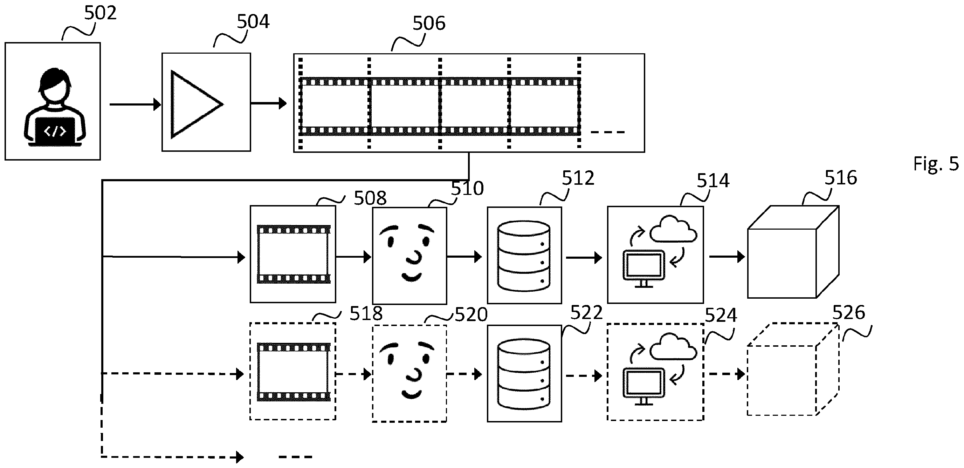

Fig. 4 and 5 show the method from the perspective of the device for providing content of a content author for authentication. A more in-depth example of the method for providing content of a content author for authentication is given in Fig. 5.

Fig. 5 shows the method for providing content of a content author for authentication applied to pre-recorded content.

In a first step 502, content may be created by a content author. The content author may represent a plurality of persons registered in an account of the content author. The content author may be perceived audibly, visually, or in both manner in the content.

In a second step 504, the content may be obtained. The content provided for authentication may be pre-recorded. The content may be any multimedia element. The content may be recorded by a camera or smartphone or any tool that can record multimedia.

In a third step 506, the content may be fragmentized in a plurality of fragments, wherein the content may be fragmentized according to a pre-defined rule, and, optionally, wherein the pre-defined rule comprises the fragmentation of content in a pre-defined number of equal fragments.

In a step 508, a first author fragment of content is obtained by the content author. The first author fragment of content may be one of the plurality of fragments, wherein a block of key information may be created for each of the fragments of the plurality of fragments. Step 508 may correspond to step 402 of Fig. 4.

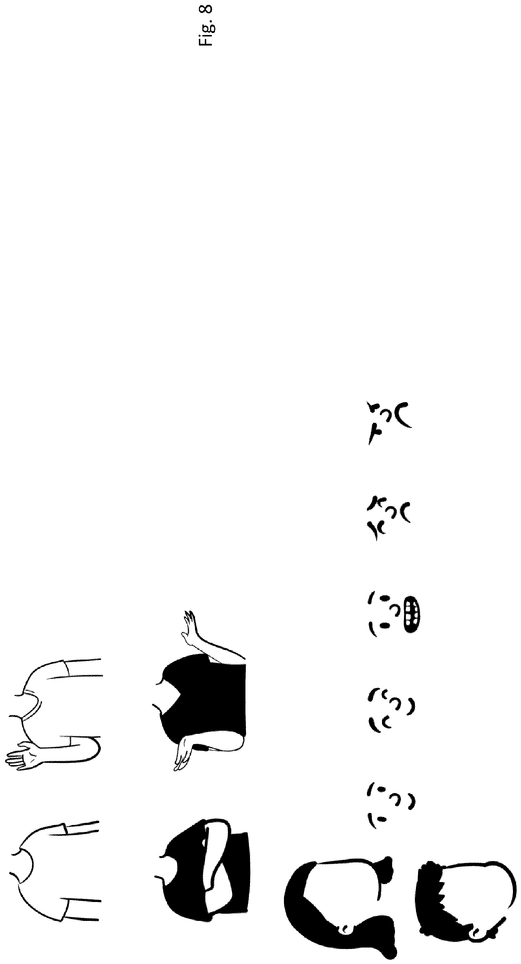

In a step 510, a first state author vector from the first author fragment of content is generated. The first state author vector may not be confined to the states of the content author but may also pertain to the actions of the content author. Further examples of the state author vector are given in Fig. 8. Step 510 may correspond to step 404 of Fig. 4.

In a step 512, the first state author vector may be replaced by a first database state author vector, wherein the first database state author vector is a vector of a state vectors database, wherein a metric between the first state author vector and the first database state author vector lies below a pre-defined threshold value.

The state vectors database may refer to a database that stores vector data of the outward appearance, the face comprising the structural composition of the face and/or expressions of the face, the body comprising the structural composition of the body and/or movements of the body, the voice, or similar aspects of different persons who may not be the content author. Each vector may consist of a set of numerical values or features that describe the characteristics of an object. The object may be related to the outward appearance, the face comprising the structural composition of the face and/or expressions of the face, the body comprising the structural composition of the body and/or movements of the body, the voice, or similar aspects. The state vectors database may employ similarity search, where the goal is to retrieve vectors that are similar to the first state author vector. By using appropriate distance metrics, such as Euclidean distance or cosine similarity, the state vectors database may quickly identify similar vectors within the database. The most similar vector may be chosen as the first database state author vector replacing the first state author vector.

As an advantage of replacing the first state author vector by a first database state author vector, stability of the system may be increased, as bringing all vectors to a common standard, the system as well as all comparison operations may be simplified. As a further advantage, the computational power as well as the memory requirements can be decreased, since the identifier of the first state author vector can be replaced by the number of the first database state author vector in the state vectors database, instead of saving the entire data information of the first state vector itself. Hence, the storage space of the first block of key information may be saved.

In a step 514, a first certificate to create a first digital signature for the first author fragment of content may be requested from a key center.

The first digital signature may be used for verification of authenticity. It may help in affirming that the sender of the key information, which may be the content author, is legitimate and not an impostor. It further may confirm that the block of key information sent has not been altered in transit. It may help in validating that the signer that may be the content author or the key center is authorized to carry out certain transactions or may have permission to access data. The digital signature may guarantee security, trust, and consent. It may ensure the secure conduct of the transactions of the blocks of key information and may enable a system to which the methods and devices of the present invention are applied to be tamper evident.

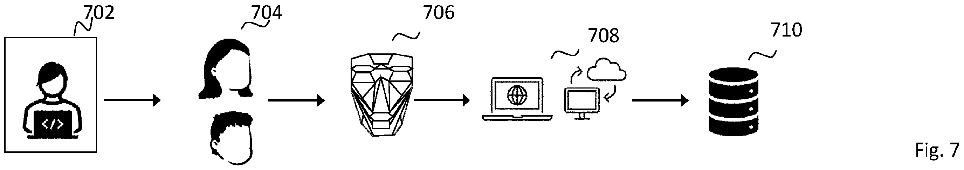

The key center may contain all information related to the content author or may access all information about the content author. The information of the content author may relate to the registered biometrics data of the content author and the content. Further information regarding biometrics data is given in Fig. 7.

In a step 516, a first block of key information based on the first author fragment of content is created, wherein the first block of key information comprises information of the first state author vector and the first digital signature. Step 516 may correspond to step 408 of Fig. 4.

The first block of key information may further comprise information about the numbering of the first block of key information, and/or a preceding state author vector, wherein the preceding state author vector is obtained from a fragment of content preceding the first author fragment, and/or the first certificate for verification of the first digital signature. Said information may pertain to structural information about the first block of key information.

In a further step (not shown), the structural information about the first block of key information may be transmitted by the content author to the key center.

In an additional step (not shown), instructions for storing the information in a distributed ledger linked to an account of the content author may be sent.

Steps 508 to 516 may be repeated for a second author fragment of content by steps 518 to 526. The second author fragment of content may be one of the plurality of fragments, wherein the first author fragment precedes the second author fragment of content.

In step 518, a second author fragment of content is obtained.

In step 520, a second state author vector from the second author fragment of content is generated.

In step 522, the second state author vector may be replaced by a second database state author vector, wherein the second database state author vector may be a vector of a state vectors database, wherein a metric between the second state author vector and the second database state author vector may lie below a pre-defined threshold value.

In step 524, a second certificate to create a second digital signature for the second author fragment of content may be requested from the key center.

In step 526, a second block of key information based on the second author fragment of content may be created, wherein the second block of key information comprises information of the second state author vector and the second digital signature, wherein the second author fragment may be a subsequent fragment of the first author fragment of content, wherein the first author fragment of content and the second author fragment of content may be connected sequentially. The second block of key information may be a subsequent block of key information of the first block of key information. The first block of key information may be a previous or a preceding block of key information in relation to a second block of key information. The second block of key information may be a next block of key information succeeding the first block of key information. This may be the case in any embodiment comprising a first and a second block of key information, a pair of blocks of key information or a chain of blocks of key information. The first and/or second block of key information may be part of a plurality of (any number of) blocks of key information, such as a blockchain.

The first state author vector and the second state author vector each may be linked to a timestamp of the content.

Steps 508 to 516 may be repeated until a block of key information for all author fragments of content of the plurality of fragments has been created.

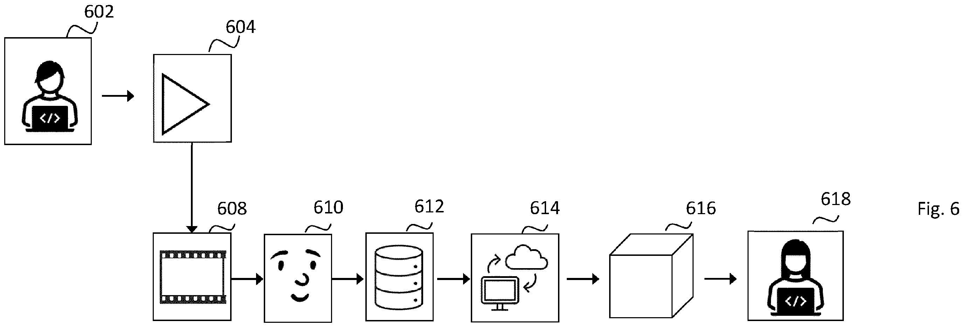

Fig. 6 shows the method for providing content of a content author for authentication applied to real-time content. Therefore, the example of the method shown in Fig. 6 differs from the example shown in Fig. 5 in that the content is transmitted in real-time.

In a first step 602, content may be created by a content author. The content author may represent a plurality of persons registered in an account of the content author. The content author may be perceived audibly, visually, or in both manner in the content.

In a second step 604, the content provided for authentication may be transmitted in real-time. Hence, the first author fragment may be generated after a pre-defined time of content has passed prior to obtaining the first author fragment of content. The content may be any multimedia element. The content may be recorded by a camera or smartphone or any tool that can record multimedia.

In step 608, a first author fragment of content is obtained by the content author. Step 608 may correspond to step 402 of Fig. 4.

In step 610, a first state author vector from the first author fragment of content is generated. Step 610 may correspond to step 404 of Fig. 4.

In step 612, the first state author vector may be replaced by a first database state author vector, wherein the first database state author vector may be a vector of a state vectors database, wherein a metric between the first state author vector and the first database state author vector may lie below a pre-defined threshold value.

In step 614, a first certificate to create a first digital signature for the first author fragment of content is requested from a key center.

In step 616, a first block of key information is created based on the first author fragment of content, wherein the first block of key information comprises information of the first state author vector and the first digital signature. The first block of key information may further comprise information about the biometrics of the content author, the timestamp of the first state author vector, and/or the first certificate for verification of the first digital signature. Step 616 may correspond to step 408 of Fig. 4.

In step 618, the first block of key information may be sent to a content user, who intends to verify the truthfulness of the content provided by the content author and the identity of the person perceived in the content.

Steps 608 to 618 may be repeated for every author fragment that has been generated after passing a pre-defined time of content transmitted in real-time until the real-time transmission of content has ceased.

Fig. 7 shows a further example of the method from the perspective of the biometrics data providing unit 320.

In step 702, biometrics vector data of the content author may be provided by the content author.

Since the content author may represent one or more persons to be verified in the content, biometrics vector data for one or multiple persons may be provided, as can be taken from step 704. The biometrics vector data for one or multiple persons may be linked to an account of the content author, wherein the account of the content author in the key center is linked to the biometrics vector database.

In step 708, the biometrics vector data may be sent for verification and confirmation of the identity of the content author to the key center.

In step 710, instructions for storing verified biometrics vector data of the content author in a biometrics vector database may be sent.

Fig. 8 shows examples of state vectors. This list is not exhaustive. The state author vector may not only refer to the state of the content author at said specific time in the content, but also generally to the state of being or physical condition of the content author at said specific time in the content. For example, the state author vector may comprise parameters of the content author's state or physical condition. The parameters of the content author's state or condition may relate to personal characteristics of the content author. They may pertain to the outward appearance, the face comprising the structural composition of the face and/or expressions of the face, the body comprising the structural composition of the body and/or movements of the body, the voice, or similar aspects of the content author.

Fig. 9 shows a flow diagram illustrating an example of a method for authenticating a provided content of a content author from the complementary perspective of a content user.

In a first step 902, the content of the content author is received by the content user.

In a second step 904, information of a first block of key information based on a first author fragment of content is requested from a key center, wherein the first author fragment of content is associated with the content author and wherein the first block of key information comprises information of a first state author vector and a first digital signature.

In a third step 906, a first user fragment of content is obtained, wherein the first user fragment of content corresponds to the first author fragment of content.

In a fourth step 908, the content is authenticated checking the correctness of the first digital signature.

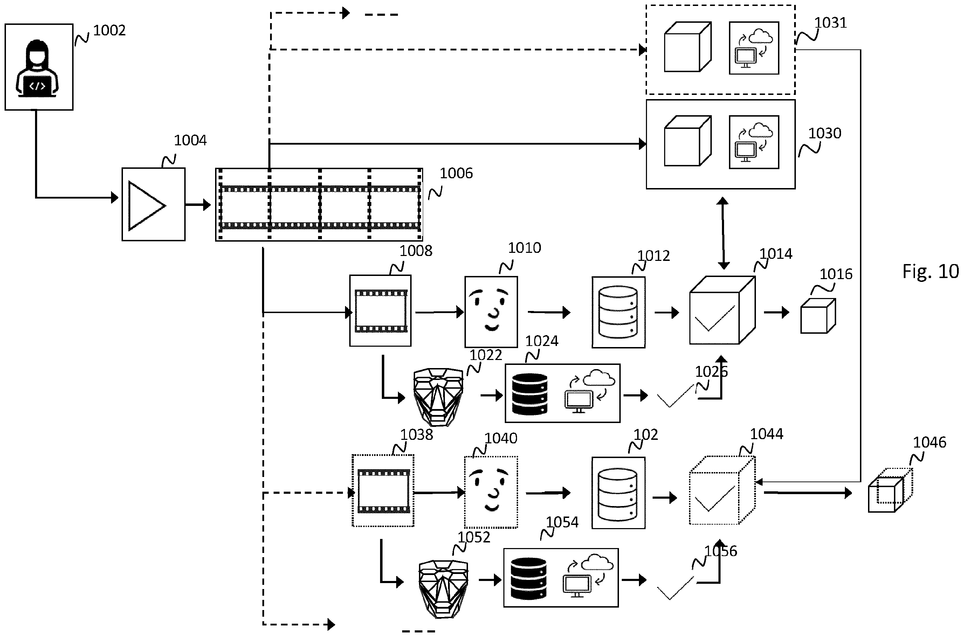

A more in-depth example of the method for authenticating the provided content of a content author from the complementary perspective of a content user is given in Fig. 10.

In step 1002, a content user may be a person who intends to authenticate the identity of the content author. The content user may be a person who consumes the content provided by the content author.

In a step 1004, the content of the content author is received by the content user. Step 1004 may correspond to step 902 of Fig. 9. The received content may be pre-recorded.

In a step 1006, the received content may be fragmentized in a plurality of fragments, wherein the first author fragment of content is one of the plurality of fragments. The content may be fragmentized according to a pre-defined rule, and, optionally, wherein the pre-defined rule may comprise the fragmentation of content in a pre-defined number of equal fragments.

In a step 1030, information of a first block of key information based on a first author fragment of content is requested from a key center, wherein the first author fragment of content is associated with the content author and wherein the first block of key information comprises information of a first state author vector and a first digital signature. Step 1030 may correspond to step 904 of Fig. 9.

Step 1030 may comprise requesting biometrics vector data of the content author perceived in the content from the key center.

In a step 1008, a first user fragment of content is obtained, wherein the first user fragment of content corresponds to the first author fragment of content. Step 1008 may correspond to step 906 of Fig. 9.

In the case of untampered content, when the user fragment of content corresponds to the author fragment of content, the user fragment of content and the author fragment of content may be identical.

In a step 1010, a first state user vector from the first user fragment of content may be generated.

In a step 1012, the first state user vector may be replaced by a first database state user vector, wherein the first database state user vector may be a vector of a state vectors database wherein a metric between the first state user vector and the first database state user vector may lie below a pre-defined threshold value.

In a step 1014, the content is authenticated by comparing information of the first state user vector with information of the first block of key information and checking the correctness of the first digital signature. Step 1014 may correspond to step 908 of Fig. 9.

In an additional step (not shown), the content may be authenticated by comparing information of the first state user vector with information of the first block of key information.

In a step 1016, the authenticated first block of key information may be created.

Steps 1030 and 1008 to 1016 may be repeated for a second author fragment of content until every author fragment of content of the plurality of author fragments of content has been authenticated.

In a step 1031, information of a second block of key information based on a second author fragment of content may be requested from the key center, wherein the second author fragment of content may be associated with the content author and wherein the second block of key information may comprise information of a second state author vector and a second digital signature.

In a step 1038, a second user fragment of content may be obtained, wherein the second user fragment of content may correspond to the second author fragment of content.

In a step 1040, a second state user vector from the second user fragment of content may be generated.

In a step 1042, the second state user vector may be replaced by a second database state user vector, wherein the second database state user vector is a vector of a state vectors database wherein a metric between the second state user vector and the second database state user vector lies below a pre-defined threshold value.

In a step 1044, the content is authenticated by checking the correctness of the second digital signature.

In an additional step (not shown), the content may be verified by comparing information of the second state user vector with information of the second block of key information.

In a further step (not shown), the content may be checked for connectivity of a plurality of blocks and/or the presence of missing and/or excess blocks of the plurality of blocks.

In a step 1046, instructions to add the second block of key information to the first block of key information may be sent connecting the first block of key information and the second block of key information sequentially. The second block of key information may be connected to the first block of key information through a hash value of the first block of key information.

In addition to authenticating the content by checking the correctness of the first digital signature and by comparing information of the first state user vector with information of the first block of key information, biometrics data of the content author perceived in the content is verified.

Therefore, the method illustrated in Fig. 10 may further comprise steps related to the verification of biometrics data.

In a step 1022, a first biometrics vector from the first user fragment of content may be obtained by the content user.

In a step 1024, the first biometrics vector may be compared with the biometrics vector data of the content author stored in a biometrics vectors database.

In a step 1026, the first biometrics vector may be verified. Verified biometrics information of the first biometrics vector may be stored in the first block of key information. The verifying of the first state user vector and the first biometrics vector may be conducted independently of each other.

Steps 1022 to 1026 may be repeated for an additional user fragment of content, such as the second user fragment of content until every author fragment of content of the plurality of fragments regarding the biometrics data of the content author has been verified.

In a step 1052, a second biometrics vector from the second user fragment of content may be obtained by the content user.

In a step 1054, the second biometrics vector may be compared with the biometrics vector data of the content author stored in a biometrics vectors database.

In a step 1056, the second biometrics vector may be verified. Verified biometrics information of the second biometrics vector may be in the first block of key information. The verifying of the second state user vector and the second biometrics vector may be conducted independent of each other.

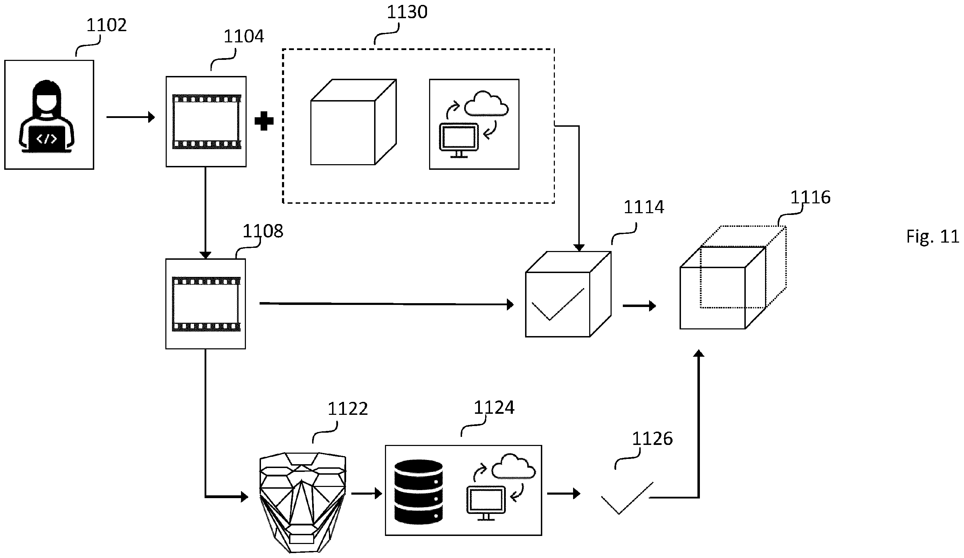

Fig. 11 shows the method for authenticating a provided content of a content author applied to real-time content. Therefore, the example of the method shown in Fig. 11 differs from the example shown in Fig. 10 in that the content is received in real-time.

In a step 1102, a content user may be a person who intends to authenticate the identity of the content author. The content user may be a person who consumes the content provided by the content author.

In a step 1104, the content of the content author is received by the content user. The content may be received in real-time. Step 1104 may correspond to step 902 of Fig. 9.

In a step 1130, information of a first block of key information based on a first author fragment of content is requested from a key center, wherein the first author fragment of content is associated with the content author and wherein the first block of key information comprises information of a first state author vector and a first digital signature. Step 1130 may correspond to step 904 of Fig. 9.

Step 1030 may comprise requesting biometrics vector data of the content author perceived in the content from the key center.

In a step 1108, a first user fragment of content is obtained, wherein the first user fragment of content corresponds to the first author fragment of content. Step 1108 may correspond to step 906 of Fig. 9.

In a step 1114, the content is authenticated by comparing information of the first state user vector with information of the first block of key information and checking the correctness of the first digital signature. Step 1114 may correspond to step 908 of Fig. 9.

In a step 1116, the authenticated first block of key information may be created.

Steps 1130 and 1108 to 1116 may be repeated for an additional author fragment of content, such as second author fragment of content, until the real-time transmission of content has ceased.

In a further step, information of a second block of key information based on a second author fragment of content is requested from the key center, wherein the second author fragment of content is associated with the content author and wherein the second block of key information comprises information of a second state author vector and a second digital signature.

In addition to authenticating the content by checking the correctness of the first digital signature, biometrics data of the content author perceived in the content may be also verified.

Therefore, the method illustrated in Fig. 11 may further comprise steps related to the verification of biometrics data.

In a step 1122, a first biometrics vector from the first user fragment of content may be obtained by the content user.

In a step 1124, the first biometrics vector may be compared with biometrics vector data of the content author stored in a biometrics vectors database.

In a step 1126, the first biometrics vector may be verified. Verified biometrics information of the first biometrics vector may be stored in the first block of key information. The verifying of the first state user vector and the first biometrics vector may be conducted independently of each other.

Steps 1022 to 1026 may be repeated for an additional user fragment of content, such as the second user fragment of content, until the real-time transmission of content has ceased.

In the context of the invention, authentication may refer to the process of determining whether an entity, in particular a content author, is what it declares to be. In the context of the invention, this may be achieved through the use of passwords, digital certificates, and/or biometrics data. Embodiments of the present invention authenticate that the content is truthful to the information associated with the content author.

The description of the embodiments and the figures merely serve to illustrate the techniques of the present disclosure and the advantages associated therewith but should not imply and limitation. The scope of the invention is to be determined from the appended claims.

## Claims

1. A computer-implemented method for providing content of a content author for authentication, the method comprising:
obtaining (402, 508, 608), by the content author, a first author fragment of content;
generating (404, 510, 610) a first state author vector from the first author fragment of content; and
creating (408, 516, 616) a first block of key information based on the first author fragment of content, wherein the first block of key information comprises information of the first state author vector and a first digital signature.

2. The method of claim 1, further comprising:
obtaining (518) a second author fragment of content;
generating (520) a second state author vector from the second author fragment of content; and
creating (526) a second block of key information based on the second author fragment of content, wherein the second block of key information comprises information of the second state author vector and a second digital signature, wherein the second author fragment of content is a subsequent fragment of the first author fragment of content, wherein the first author fragment of content and the second author fragment of content are connected sequentially.

3. The method of any of the preceding claims, further comprising, prior to creating the first block of key information based on the first author fragment of content:
replacing (512) the first state author vector by a first database state author vector, wherein the first database state author vector is a vector of a state vectors database, wherein a metric between the first state author vector and the first database state author vector lies below a pre-defined threshold value.

4. The method of any of the preceding claims, further comprising:
prior to the obtaining the first author fragment of content,
passing a pre-defined time of content that is transmitted continuously.

5. The method of any of the preceding claims, further comprising:
providing, by the content author, biometrics vector data of the content author;
sending the biometrics vector data for verification and confirmation of the identity of the content author to the key center; and
sending instructions for storing verified biometrics vector data of the content author in a biometrics vector database.

6. A device (102) for providing content of a content author for authentication, wherein the device comprises:
a content fragment unit (108), configured to obtain a first author fragment of content;
an author state recognition unit (110), configured to generate a first state author vector from the first author fragment of content; and
a first output unit (114), configured to create a first block of key information based on the first author fragment of content, wherein the first block of key information comprises information of the first state author vector and a first digital signature.

7. A computer-implemented method for authenticating a provided content of a content author, the method comprising:
receiving (902, 1004, 1104), by the content user, content of the content author;
requesting (904, 1030, 1130) from a key center information of a first block of key information based on a first author fragment of content, wherein the first author fragment of content is associated with the content author and wherein the first block of key information comprises information of a first state author vector and a first digital signature;
obtaining (906, 1008, 1108) a first user fragment of content, wherein the first user fragment of content corresponds to the first author fragment of content; and
authenticating (908, 1014, 1114) the content by checking the correctness of the first digital signature.

8. The method of claim 7, further comprising:
requesting (1031) from the key center information of a second block of key information based on a second author fragment of content, wherein the second author fragment of content is associated with the content author and wherein the second block of key information comprises information of a second state author vector and a second digital signature;
obtaining (1038) a second user fragment of content, wherein the second user fragment of content corresponds to the second author fragment of content;
authenticating (1044) the content by checking the correctness of the second digital signature; and
sending (1046, 1116) instructions to add the second block of key information to the first block of key information connecting the first block of key information and the second block of key information sequentially.

9. The method of any of the claims 7 to 8, further comprising:
obtaining (1022, 1122), by the content user, a first biometrics vector from the first user fragment of content; and
comparing (1024, 1124) the first biometrics vector with biometrics vector data of the content author stored in a biometrics vectors database.

10. The method of any of the claims 7 to 9, further comprising:
verifying the biometrics vector and the first state user vector, wherein the verifying of the first state user vector and the biometrics vector is independent of each other.

11. The method of any of the claims 7 to 10, wherein the received content (1004) is fragmentized in a plurality of fragments (1006) prior to obtaining the first author fragment of content, wherein the first author fragment of content is one of the plurality of fragments.

12. The method of any of the claims 7 to 11, further comprising:
generating (1010) a first state user vector from the first user fragment of content; and
verifying the content by comparing information of the first state user vector with information of the first block of key information.

13. The method of claim 8, optionally in combination with any of the claims 9 to 12, further comprising:
generating (1040) a second state user vector from the second user fragment of content; and
verifying the content by comparing information of the second state user vector with information of the second block of key information.

14. A device (202) for authenticating a provided content of a content author, wherein the device comprises:
a content receiving unit (208), configured to receive content of the content author;
a user communication unit (210), configured to request from a key center information of a first block of key information based on a first author fragment of content, wherein the first author fragment of content is associated with the content author and wherein the first block of key information comprises information of a first state author vector and a first digital signature;
an input unit (212), configured to obtain a first user fragment of content, wherein the first user fragment of content corresponds to the first author fragment of content; and
an authentication unit (214), configured to authenticate the content by checking the correctness of the first digital signature.

15. A computer program comprising computer-readable instructions that when the program is executed by a computer, cause the computer to carry out the method of any of the claims 1 to 5 or claims 7 to 13.
